Europäisches Patentamt

European Patent Office

Office européen des brevets

(11) Publication number: **0 267 449 B1**

## EUROPEAN PATENT SPECIFICATION

(45) Date of publication of patent specification: **22.07.92**  (51) Int. Cl.⁵: **C01G 25/02**

(21) Application number: **87114915.9**

(22) Date of filing: **13.10.87**

The file contains technical information submitted after the application was filed and not included in this specification

(54) **Synthesis of partially-stabilized tetragonal zirconia.**

(30) Priority: **30.10.86 US 925579**

(43) Date of publication of application:
**18.05.88 Bulletin 88/20**

(45) Publication of the grant of the patent:
**22.07.92 Bulletin 92/30**

(84) Designated Contracting States:
**DE FR GB**

(56) References cited:
**FR-A- 1 569 636**
**US-A- 4 473 542**
**US-A- 4 520 114**
**US-A- 4 590 090**

**CHEMICAL ABSTRACTS, vol. 104, no. 18, May 1986, page 165, abstract no. 151792b, Columbus, Ohio, US; & JP-A-60 255 622 (TOYO SODA Mfg. CO., LTD) 17-12-1985**

(73) Proprietor: **International Business Machines Corporation**
**Old Orchard Road**
**Armonk, N.Y. 10504(US)**

(72) Inventor: **David, Lawrence Daniel**
**28 Edgehill Drive**
**Wappingers Falls, N.Y. 12590(US)**
Inventor: **Anderson, Ronald Maurice**
**40 Westview Drive**
**Poughkeepsie, N.Y. 12603(US)**

(74) Representative: **Combeau, Jacques et al**
**Compagnie IBM France Département de Propriété Intellectuelle**
**F-06610 La Gaude(FR)**

## Description

The present invention is concerned with methods of synthesizing high purity, partially-stabilized tetragonal zirconia using a metal salt of a hydroxycarboxylic acid of the desired stabilizing metal oxide combined with a zirconium salt or a zirconyl salt of a hydroxycarboxylic acid as the precursor materials. The partially-stabilized tetragonal zirconia is a ceramic material useful as an additive to other types of ceramic materials to toughen a composite. It can also be used alone in applications requiring high temperature, high strength, and toughness. In particular, the high purity, partially stabilized tetragonal zirconia is useful for structural and electronic packaging applications.

## Background Art

Partially-stabilized tetragonal zirconia is well established as a toughening agent for ceramics. The primary toughening mechanism is believed to be the transformation of tetragonal zirconia to monoclinic in the presence of an applied stress field. The volume expansion of this transformation is about 4%, which stops progression of a crack by pinning it. Other mechanisms, such as microcracking and crack deflection, have also been invoked to account for the toughening imparted by incorporating zirconia into ceramics.

Zirconia occurs in its natural, pure form as the monoclinic phase, which has little toughening capability. When doped with a few mole percent of stabilizing oxides, such as MgO, CaO, Y2O3, or sesquioxides from the lanthanide series, the zirconia forms a metastable tetragonal phase; this is referred to as partially stabilized zirconia. If too little dopant is used, the zirconia remains monoclinic. If too much dopant is used, the fully stabilized cubic phase obtains, which has no toughening value. The correct mole percent of dopant is determined by looking at the appropriate phase diagrams; see, for example, "Phase Diagrams for Ceramists" available from the American Ceramic Society, Columbus, Ohio, Vol I (1964), Vol II (1969), Vo. III (1975), Vol. IV (1981), and Vol. V (1983).

Ceramics comprising partially stabilized tetragonal zirconia have been disclosed in U.S. Patent No. 4,279,655 to Garvie et al., wherein a magnesia partially stabilized zirconia ceramic material possessing from about 2.8 to about 4.0 weight percent magnesia, and made from a zirconia powder containing no more than about 0.03 percent silica is described. The ceramic material has a microstructure produced as a consequence of the method by which the ceramic material is made. The microstructure comprises grains of cubic stabilized zirconia, wherein precipitates of tetragonal zirconia are formed during cooling from the firing temperature. The precipitates of tetragonal zirconia are elliptical in shape, with a long axis of about 150 nanometers (1500 Angstrom) units. In addition, some of the tetragonal zirconia precipitates are transformed into a non-twinned microcrystalline monoclinic form of zirconia by reducing the temperature of the material to below 800°C, and then subsequently holding the material at a temperature in the range from 1000°C to 1400°C.

U.S. Patent No. 4,525,464 to Claussen et al. describes a method of producing a ceramic body containing zirconium dioxide which is partially stabilized with yttrium oxide and/or one or more rare earth oxides, wherein the degree of stabilization to the tetragonal lattice ranges from about 30% to about 100%. The stabilization is achieved within a thin layer on the surface of a sintered or HIPed ceramic body or on the surface of a green body presolidified at a relatively low temperature. The ceramic or green body is provided with a surface of yttrium oxide, cerium oxide, magnesium oxide, calcium oxide, etc., either in the form of a pressed-on layer of powder or of a slip containing yttrium oxide or magnesium oxide, which can be sprayed on or applied in the form of a bath for impregnating the surface. The bodies thus treated are then fired or sintered at temperatures between 1000°C and 1600°C for a time period ranging between about 10 minutes and 100 hours. The desired surface stabilization is also achieved by other disclosed thermal processing.

All of the above methods of producing partially stabilized tetragonal zirconia result in certain undesirable qualities in the product. The ideal partially stabilized tetragonal zirconia powder is spherical, fine, sinterable at low temperatures (below 1,000°C for glass ceramic applications of the type used in semiconductor packaging techonology), 100% partially stabilized tetragonal in phase, chemically homogeneous, anion-free, and is synthesizable from air-stable, water-insensitive, easily handled precursors. (Anions can stabilize the cubic or tetragonal phase of ZrO2 by settling into grain boundaries. However, tetragonal phase stabilized by anions is destroyed by processing at temperatures above 900°C, as the anions volatilize. Zirconia with no stabilizer will eventually transform irreversibly to monoclinic phase on heating due to the growth of ZrO2 crystallites beyond the size limit for the tetragonal phase to be stable.)

There are chemical methods of producing partially stabilized tetragonal zirconia such as coprecipitation of the zirconia and its stabilizing oxide from an aqueous chloride solution, followed by calcination from 500°C to 1000°C. High purity zirconia can be synthesized by hydrothermal treatment of zircon or zirconyl chloride; the hydrothermal treatment of a YCl3-ZrOCl2 mixture yields Toyo Soda's Y2O3-stabilized ZrO2. Hydrolysis of metal alkoxides to form tetragonal and cubic zirconia was demonstrated nearly twenty years ago by Mazdiyasni and his coworkers, K. S. Mazdiyasni, C. T. Lynch, J. S. Smith, J. Amer. Cer. Soc. 48, 372-375 (1965); J. Amer. Cer. Soc. 50, 532-537 (1967), and more recently by thermal decomposition of metal alkoxides as reported in "Low Temperature Preparation of Stabilized Zirconia", M.K. Dongare, A.P.B. Sinha, J. Mater. Sci. 19, 49-56 (1984).

Coprecipitation methods of synthesis can result in phase separations due to differential reactivities of the precursor salt. Metal alkoxides which are used as precursors in some methods of synthesis are water and air-sensitive, and different alkoxides hydrolyze at different rates; a mixture of two alkoxides can thus lead to a phase-separated oxide on hydrolysis and calcination.

There are chemical methods of producing partially stabilized tetragonal zirconia which avoid the problems encountered in synthesis methods of the type described above. These chemical methods provide a product with increased purity and uniformity of structure over the material produced by thermo-mechanical or hydrothermal methods. U.S. Patent No. 4,520,114 to L. D. David describes a process for producing a fine grain metastable (partially stabilized) tetragonal zirconia which has an average particle size less than about 100 nanometers (1000 Angstroms) in diameter. The process involves a multistage thermolysis of precursor solids comprising a homogeneous mixture of beta-diketonate compounds of zirconium and a stabilizer metal such as yttrium. A homogeneous solution of zirconium beta-diketonate and a metastabilizing quantity of metal beta-diketonate selected from alkaline earth and yttrium metal beta-diketonates is prepared. The solvent medium used to prepare the homogeneous solution is removed to provide a residual mass of precursor solids. The precursor solids are pyrolyzed in an inert atmosphere at a temperature between about 300°C and 800°C, until the precursor solids have a carbon content between about 1-10 weight percent, based on the weight of precursor solids, the precursor solids are then calcined in the presence of molecular oxygen at a temperature between about 300°C and 800°C to yield metastable tetragonal zirconia powder having an average particle size less than about 100 nanometers (1000 Angstroms). U.S. Patent No. 4,588,576 to L.D. David describes the use of ultrasonic energy input during the gelling stage of the process described above to enhance the production of the high purity metastable tetragonal zirconia powder.

The synthesis of tetragonal zirconia from acetylacetonates, as described above, while providing high purity and particle sizes less than about 100 nanometers (1,000 Angstroms), yields irregular shards due to the tendency of the precursor to flow prior to decomposition to metal oxide. In addition, synthesis of tetragonal zirconia from acetylacetonates is accomplished using organic solvents to form the precursor solutions. The organic solvents necessarily provide flammability problems and increase the amount of carbon to be burned off during calcination. Another disadvantage of the acetylacetonate process is that the beta-diketonates typically used in the synthesis tend to volatilize on pyrolysis, lowering the obtainable yield.

Microcrystalline ferrimagnetic spinels have been synthesized from an aqueous solution containing alphahydroxycarboxylate salts of nickel, zinc, and iron metals as described in U.S. Patent No. 4,473,542 to L. D. David. A similar approach was used to attempt to synthesize tetragonal zirconia, wherein zirconyl chloride and yttrium chloride were added to an aqueous solution of citric acid. However, after boiling the solution down to form a gel, followed by calcination in air to about 700°C, monoclinic phase zirconia was formed.

The synthesis of fully stabilized cubic zirconia has been disclosed in FR-A-1,569,636 by using a mixture of zirconium salt and a stabilizing metal. However, this patent does not mentions the synthesis of tetragonal zirconia.

## SUMMARY OF THE INVENTION

In accordance with the present invention, synthesis of partially stabilized tetragonal zirconia is accomplished via a process utilizing a water-soluble metal salt of a hydroxycarboxylic acid, wherein the metal portion of the salt is the metal of the desired stabilizing metal oxide, combined with a water-soluble zirconium salt of a hydroxycarboxylic acid. Synthesis of the partially stabilized tetragonal zirconia using this method has provided high purity (greater than 95% tetragonal in phase), equiaxed agglomerated particles of tetragonal zirconia ranging in size from about 8 nanometers (80 Angstroms) to about 300 Angstroms. The ultrafine particle morphology is obtained with no grinding or milling steps.

The stabilizing metal salt and the zirconium salt are preferably water-soluble salts of alpha-hydroxycarboxylic acids such as citric acid, malic acid, tartaric acid, glycolic acid, lactic acid etc., wherein the alpha-hydroxycarboxylic acid contains between about 1-3 hydroxyl groups and about 1-3 carboxylic acid groups.

EP 0 267 449 B1

For electronic packaging applications, it is preferable that the above salts of stabilizing metal and zirconium be anion-free. The metal portion of the stabilizing metal salt can be selected from a number of metals, such as magnesium, calcium, strontium, barium, scandium, yttrium, lanthanum, rare earth metals from the lanthanide series, etc.

One method of the invention comprises:

a) forming an admixture of a water-soluble zirconium salt of a hydroxycarboxylic acid and a water-soluble stabilizing metal salt of a hydroxycarboxylic acid in water to form a homogeneous solution;

b) removing water to produce a particulate gel; and

c) calcining the gel by treating the gel in a furnace at temperatures up to about 970°C in air or other oxygen-containing ambient to remove any organic residues. It is preferred to use anion-free water for reasons previously discussed.

To produce tetragonal phase zirconia, the mole ratio of the stabilizing metal salt to the zirconium salt must be sufficient so that on calcination tetragonal phase zirconia is obtained. The required mole ratio can be determined from "Phase Diagrams for Ceramists" (cited earlier).

The preferred method of removal of water from the solution of water-soluble hydroxycarboxylic acid salts of the stabilizing metal and zirconia is spray drying. Spray drying yields a fine, micron-sized, spherical or equiaxed particulate gel. Upon calcining of the particulate gel, an anion-free, equiaxed, homogeneous, white powder of agglomerates about 2 microns in size is generated, with no grinding or milling. X-ray data show this powder is tetragonal in phase.

Another method of the invention comprises:

a) suspending an insoluble zirconyl salt of a hydroxycarboxylic acid in an aqueous solution of a water-soluble stabilizing metal salt of a hydroxycarboxylic acid;

b) removing water to produce a particulate gel; and

c) calcining the gel by treating the gel in a furnace at temperatures up to about 970°C in air or other oxygen-containing ambient to remove any organic residues.

Another method of the invention comprises:

a) suspending an insoluble stabilizing metal salt of a hydroxycarboxylic acid in an aqueous solution of a water-soluble zirconium salt of a hydroxycarboxylic acid;

b) removing water to produce a particulate gel; and

c) calcining the gel by treating the gel in a furnace at temperatures up to about 970°C in air or other oxygen-containing atmosphere to remove any organic residues.

Again, it is preferred that the water used in the above processes be anion-free, and the preferred method of removal of water from the suspension is spray drying.

The present invention provides advantages over other methods known in the art in that the synthesis is done at lower temperatures than conventional methods; the synthesis is done in water, avoiding flammability problems; the precursor gel does not volatilize during pyrolysis, enabling yields exceeding 90% of theoretical; the precursor gel does not flow prior to pyrolysis, so irregular shards are not formed in the product; and the product formed is chemically homogeneous and free of anionic contaminants.

The methods of the present invention are useful to one skilled in the art of electronic packaging for the purpose of producing tetragonal phase zirconia, which can be used to toughen ceramic packaging materials as previously disclosed.

DESCRIPTION OF THE PREFERRED EMBODIMENTS

The present invention discloses methods of synthesizing partially stabilized tetragonal zirconia: (1) wherein a water-soluble stabilizing metal salt of a hydroxycarboxylic acid and a water soluble zirconium salt of a hydrocarboxylic acid are combined in the proper molar ratios to form tetragonal phase zirconia; or (2) a water-soluble stabilizing metal salt of a hydroxycarboxylic acid and a water-insoluble zirconyl salt of a hydroxycarboxylic acid; or (3) a water-insoluble stabilizing metal salt of a hydroxycarboxylic acid and a water-soluble zirconium salt of a hydroxycarboxylic acid, are combined in the proper molar ratios to form tetragonal phase zirconia. Those skilled in the art can calculate the mole percent of stabilizing metal oxide required for the tetragonal phase by referring to the appropriate phase diagram and adjusting the molar quantities of starting materials in the solution or suspension to yield the appropriate composition.

For any of the syntheses described above, the organic portion of the water-soluble stabilizing metal salt, the water-insoluble stabilizing metal salt, the water-soluble zirconium salt, or the water-insoluble zirconyl salt is preferably the deprotonated form of an alpha-hydroxycarboxylic acid such as citric acid, malic acid, tartaric acid, glycolic acid, etc. The metallic portion of the water-soluble stabilizing metal salt is preferably magnesium, calcium, yttrium, lanthanum, or a metal from the lanthanide series. The metallic portion of the

4

water-insoluble stabilizing metal salt is preferably cerium.

EXAMPLES

EXAMPLE ONE

Ammonium zirconium citrate, 288.879 grams, (Noah Chemical Co., Farmingdale, N.Y.; 30.63% zirconium, 0.97 mole zirconium), and 5.81 grams of magnesium citrate (Noah Chemical Co.; 12.55% magnesium, 0.03 mole magnesium) were dissolved in about two liters of distilled water. The solution was spray-dried through a Buchi 190 mini-spray dryer at aspirator setting 12, heater setting 16 (inlet temp. about 208°C, outlet temp. about 119°C), peristaltic pump setting about 15, gas meter setting of about 550-600 scf/hr of nitrogen. A fine white powder was collected in the receiver cup. The powder was calcined in an alumina boat in an ashing furnace in air. The heating rate of the furnace was about 5°C per minute up to a temperature of about 700°C. The furnace was held at about 700°C for a period of about 10 hours. The yield of powder was 106.0 grams (about 87.7% of theoretical yield, based on the metal content of the precursor materials). X-ray revealed that the powder was tetragonal in phase, with the monoclinic phase barely detectable in baseline. TEM displayed about 25 nanometers (250 Angstroms)-sized tetragonal particles. The particle agglomerates were about two micrometers average size in diameter and showed nothing except magnesium and zirconium in the elemental X-ray scans.

EXAMPLE TWO

Ammonium zirconium citrate, 296.9 grams, was weighed out and dissolved in about three liters of deionized water. The appropriate amount of a yttrium citrate was then added to the solution. Since the ammonium zirconium citrate was about 29.8% by weight zirconium, this represented about 0.97 mole of zirconium oxide ($ZrO_2$). The phase diagram for the $Y_2O_3/ZrO_2$ binary system, obtained from "Phase Diagrams for Ceramists", indicated that about 3 mole% of yttrium oxide ($Y_2O_3$) in zirconium oxide was required to produce tetragonal phase zirconia. Thus, 0.03 mole of yttrium oxide or 0.06 mole of yttrium was needed. This equated to about 26.5 grams of the yttrium citrate (which was about 20.3% by weight yttrium).

The final concentration of the solution was typically at least about 10% w/w metal citrates/water. The solution was spray dried as described in EXAMPLE ONE. The product powder was collected from the receiver and calcined as described in EXAMPLE ONE except that the maximum temperature was about 650°C and the furnace was held at about 650°C for a period of about four hours. In some cases a recalcination of the powder to about 965°C was done using the same 5°C per minute heating rate with a holding period at about 965°C of about 2 to 2.5 hours. A typical yield for this process was about 85% of theoretical weight based on the precursor materials.

The powder produced by this method yielded spherical puff-balls ranging in size from about 1 micrometer to about 6 micrometers, which consisted of much smaller agglomerated particles. After calcination to about 650°C, the particles making up the aggregate puff-balls formed a bimodal diameter distribution of about 80 Angstroms and about 300 Angstroms in size. After calcination to about 965°C, the size modes grew to about 300 Angstroms and about 100 nanometers (1,000 Angstroms), respectively.

An alternate method of dehydration of the solution, by simply boiling down the solution in a beaker on a hot plate to a brittle mass, which was crushed into a powder, was also used. A planetary mill (Pulverisette 5, Fritsch GmbH, Idar-Oberstein, West Germany) was used to crush the powder over about a one hour period. The crushed powder was then calcined in a similar manner to the spray dried citrate precursor. Yields via this method averaged about 95% of theoretical yield, based on the metals content of the precursor materials. The powder formed by simply boiling the citrate solution dry, crushing the gel, and calcining was dense and irregular in shape. The powder particle size ranged from about 0.5 micrometers to about 3 micrometers.

EXAMPLE THREE

Three different stabilizing metal-oxide agents were employed for partially stabilizing the zirconia, MgO, $CeO_2$, and $Y_2O_3$. Yttrium and magnesium have soluble citrates, cerium citrate is not soluble. Solutions of these citrates ( a suspension, in the case of cerium) were mixed in the appropriate ratios with ammonium zirconium citrate to yield partially stabilized tetragonal zirconia compositions listed in the Table below:

5

| Stabilizing Oxide | Mole % Theoretical | Mole% Found |
|---|---|---|
| Y2O3 | 3.4 | 3.5 |
| Y2O3 | 2.5 | 2.6 |
| MgO | 3.0 | 3.0 |
| CeO2 | 6.2 | 11.8 |

With the exception of the cerium oxide-stabilized zirconia, the composition of the citrates placed in solution was maintained throughout the process to the final calcination at temperatures as high as about 965°C, within experimental error. The high concentration of CeO2, compared to the expected amount, is ascribed to spray-drying of the suspension of cerium citrate particles in a solution of zirconium citrate. This yielded a mixture of zirconium citrate-rich fines and coarse cerium citrate-rich particles. The aspirator fractionated the product stream in the cyclone, depositing the coarser cerium-rich particles in the receiver cup, while the zirconium-rich fines were sucked out the aspirator. Calcination of the spray-dried product thus yielded a cerium-rich zirconia, although in the desired tetragonal phase. In no other case was excessive volatilization of one oxide or oxide precursor observed.

EXAMPLE FOUR

Zirconyl citrate, 236.71 grams (Noah Chemical Co.; 37.38% zirconium, 0.97 mole zirconium), was suspended in about two liters of distilled water, to which 5.81 grams of magnesium citrate was added (Noah Chemical Co.; 12.55% magnesium, 0.03 mole magnesium) to make a suspension of zirconyl citrate in a solution of magnesium citrate. This solution was stripped of water on a rotary evaporator to yield a fine white powder which was calcined in an ashing furnace in air. Again, the furnace heating rate was about 5°C per minute to about 700°C. The furnace was held at about 700°C for a time period of about 10 hours. A fine white powder, 112.9 grams, 85.8% of theoretical yield, resulted. This powder was determined by X-ray analysis to be tetragonal in phase. SEM revealed the particle morphology; the particles resembled 10 micrometer golf balls, which consisted of agglomerates of about 2.25 micrometer equiaxed sub-agglomerates. The crystallite size of the tetragonal zirconia was determined to be about 25 nanometers (250 Angstroms), which was the size of the primary particles comprising the agglomerates.

**Claims**

1. A method of synthesizing partially stabilized tetragonal zirconia, comprising the steps of:
   (a) forming an mixture of a first salt selected from the group including the zirconyl salt of a hydroxycarboxylic acid and the zirconium salt of a hydroxycarboxylic acid and a stabilizing metal salt of a hydroxycarboxylic acid in water; wherein the molar ratio of said first salt and said stabilizing metal salt is such that upon calcination tetragonal phase zirconia is formed;
   (b) removing sufficient water from said solution to produce a particulate gel; and
   (c) calcining said gel by treating said gel in a furnace at temperatures up to about 970°C in the presence of an oxygen-containing atmosphere to remove any organic residues.

2. The method of Claim 1 wherein said first salt is a water-soluble zirconium salt of a hydroxycarboxylic acid mixed with a water-soluble stabilizing metal salt in water to form a homogeneous solution.

3. The method of Claim 1 wherein said first salt is an insoluble zirconyl salt of a hydroxycarboxylic acid suspended in an aqueous solution of a water-soluble stabilizing metal.

4. The method of Claim 1 wherein said stabilizing metal salt is an insoluble salt suspended in an aqueous solution of a water-soluble zirconium salt.

5. The method of Claim 2 or 4 wherein said water-soluble zirconium salt of a hydroxycarboxylic acid is the salt of an alpha-hydroxycarboxylic acid containing between about 1-3 hydroxyl groups and about 1-3 carboxylic acid groups.

6. The method of Claim 5 wherein said water-soluble zirconium salt of a hydroxycarboxylic acid is the salt of an acid selected from the group consisting of citric acid, malic acid, tartaric acid, glycolic acid, and lactic acid.

7. The method of Claim 3 wherein said insoluble zirconyl salt is the salt of an alpha-hydroxycarboxylic acid containing between about 1-3 hydroxyl groups and about 1-3 carboxylic acid groups.

8. The method of Claim 7 wherein said insoluble zirconyl salt is the salt of an acid selected from the group consisting of citric acid, malic acid, tartaric acid, glycolic acid, and lactic acid.

9. The method of Claim 3, 7 or 8 wherein said suspension of said stabilizing metal and said zirconyl salts is, with the exception of the hydroxycarboxylate ion, anion-free.

10. The method of any one of the preceding claims wherein said water-soluble stabilizing metal salt of a hydroxycarboxylic acid comprises a metal selected from the group consisting of magnesium, calcium, strontium, barium, scandium, yttrium, lanthanum, and rare earth metals selected from the lanthanide series.

11. The method of Claim 10, wherein said stabilizing metal salt comprises anions of a hydroxycarboxylic acid selected from the group consisting of citric acid, malic acid, tartaric acid, glycolic acid, and lactic acid.

12. The method of any one of the preceding Claims wherein said water is removed from said solution by spray-drying techniques.

13. The method of any one of the preceding Claims wherein said calcining temperature is up to about 700°C.

**Revendications**

1. Procédé de synthèse de zircone tétragonale partiellement stabilisée, comprenant les étapes de:
   a) formation d'un mélange d'un premier sel choisi dans le groupe comprenant le sel de zirconyle d'un acide hydroxycarboxylique et le sel de zirconium d'un acide hydroxycarboxylique et d'un sel de métal stabilisant d'un acide hydroxycarboxylique dans de l'eau, dans lequel le rapport molaire de ce premier sel à ce sel de métal stabilisant est tel qu'une zircone en phase tétragonale est formée lors de la calcination du mélange;
   b) élimination d'une quantité suffisante d'eau de cette solution pour former un gel particulaire; et
   c) calcination de ce gel par traitement de ce gel dans un four à des températures allant jusqu'à environ 970°C dans une atmosphère contenant de l'oxygène pour éliminer tout résidu organique.

2. Procédé selon la revendication 1, dans lequel ce premier sel est un sel de zirconium soluble dans l'eau d'un acide hydroxycarboxylique, mélangé dans l'eau avec un sel soluble dans l'eau de métal stabilisant d'un acide hydroxycarboxylique pour former une solution homogène.

3. Procédé selon la revendication 1, dans lequel ce premier sel est un sel de zirconyle insoluble d'un acide hydroxycarboxylique mis en suspension dans une solution aqueuse d'un sel soluble dans l'eau de métal stabilisant.

4. Procédé selon la revendication 1, dans lequel ce sel de métal stabilisant est un sel insoluble mis en suspension dans une solution aqueuse d'un sel de zirconium soluble dans l'eau.

5. Procédé selon la revendication 2 ou la revendication 4, dans lequel ce sel de zirconium soluble dans l'eau d'un acide hydroxycarboxylique est le sel d'un acide $\alpha$-hydroxycarboxylique contenant d'environ 1 à 3 groupes hydroxy et d'environ 1 à 3 groupes acides carboxyliques.

6. Procédé selon la revendication 5, dans lequel ce sel de zirconium soluble dans l'eau d'un acide hydroxycarboxylique est le sel d'un acide choisi dans le groupe comprenant l'acide citrique, l'acide malique, l'acide tartrique, l'acide glycolique et l'acide lactique.

**7.** Procédé selon la revendication 3, dans lequel ce sel de zirconyle insoluble est le sel d'un acide $\alpha$-hydroxycarboxylique contenant d'environ 1 et 3 groupes hydroxy et d'environ 1 à 3 groupes acides carboxyliques.

**8.** Procédé selon la revendication 7, dans lequel ce sel de zirconyle insoluble est le sel d'un acide choisi dans le groupe comprenant l'acide citrique, l'acide malique, l'acide tartrique, l'acide glycolique et l'acide lactique.

**9.** Procédé selon l'une quelconque des revendications 3, 7 ou 8, dans lequel cette suspension des sels de métal stabilisant et de zirconyle est, à l'exception de l'ion hydroxycarboxylate, dépourvue d'anions.

**10.** Procédé selon l'une quelconque des revendications précédentes, dans lequel ce sel de métal stabilisant soluble dans l'eau d'un acide hydroxycarboxylique comprend un métal choisi dans le groupe comprenant le magnésium, le calcium, le strontium, le baryum, le scandium, l'yttrium, le lanthane et les métaux des terres rares de la série des lanthanides.

**11.** Procédé selon la revendication 10, dans lequel ce sel de métal stabilisant contient des anions d'un acide hydroxycarboxylique choisi dans le groupe comprenant l'acide citrique, l'acide malique, l'acide tartrique, l'acide glycolique et l'acide lactique.

**12.** Procédé selon l'une quelconque des revendications précédentes, dans lequel cette eau est éliminée de cette solution par des techniques de séchage par atomisation.

**13.** Procédé selon l'une quelconque des revendications précédentes, dans lequel cette température de calcination s'élève jusqu'à environ 700°C.

**Patentansprüche**

**1.** Verfahren zur Synthetisierung von teilweise stabilisiertem tetragonalem Zirkondioxid, welches die folgenden Schritte umfaßt:
(a) die Bildung eines Gemisches aus einem ersten Salz, ausgewählt aus der Gruppe, bestehend aus dem Zirkonylsalz einer Hydroxycarbonsäure und dem Zirkoniumsalz einer Hydroxycarbonsäure und einem stabilisierenden Metallsalz einer Hydroxycarbonsäure in Wasser; wobei das Molekulargewicht des ersten Salzes und des stabilisierenden Metallsalzes derart ist, daß sich bei der Calcinierung Zirkondioxid mit tetragonaler Phase bildet;
(b) die Entfernung von ausreichend Wasser aus dieser Lösung, um ein teilchenförmiges Gel zu bilden; und
(c) die Calcinierung dieses Gels durch Behandlung dieses Gels in einem Ofen bei Temperaturen bis etwa 970°C in Gegenwart einer Sauerstoff-enthaltenden Atmosphäre, um jedwede organische Rückstände zu entfernen.

**2.** Verfahren nach Anspruch 1, bei welchem das erste Salz ein wasserlösliches Zirkoniumsalz einer Hydroxycarbonsäure, gemischt mit einem wasserlöslichen stabilisierenden Metallsalz in Wasser zur Bildung einer homogenen Lösung, ist.

**3.** Verfahren nach Anspruch 1, bei welchem das erste Salz ein unlösliches Zirkonylsalz einer Hydroxycarbonsäure, suspendiert in einer wässerigen Lösung eines wasserlöslichen stabilisierenden Metalls, ist.

**4.** Verfahren nach Anspruch 1, bei welchem das stabilisierende Metallsalz ein unlösliches Salz, suspendiert in einer wässerigen Lösung eines wasserlöslichen Zirkoniumsalzes, ist.

**5.** Verfahren nach Anspruch 2 oder 4, bei welchem das wasserlösliche Zirkoniumsalz einer Hydroxycarbonsäure das Salz einer alpha-Hydroxycarbonsäure, enthaltend zwischen etwa 1-3 Hydroxylgruppen und etwa 1-3 Carbonsäuregruppen, ist.

**6.** Verfahren nach Anspruch 5, bei welchem des wasserlösliche Zirkoniumsalz einer Hydroxycarbonsäure das Salz einer Säure, ausgewählt aus der Gruppe, bestehend aus Zitronensäure, Apfelsäure, Weinsäure, Glycolsäure und Milchsäure, ist.

**7.** Verfahren nach Anspruch 3, bei welchem das unlösliche Zirkonylsalz das Salz einer alpha-Hydroxycarbonsäure, enthaltend zwischen etwa 1-3 Hydroxylgruppen und etwa 1-3 Carbonsäuregruppen, ist.

**8.** Verfahren nach Anspruch 7, bei welchem das unlösliche Zirkonylsalz das Salz einer Säure, ausgewählt aus der Gruppe, bestehend aus Zitronensäure, Apfelsäure, Weinsäure, Glycolsäure und Milchsäure, ist.

**9.** Verfahren nach Anspruch 3, 7 oder 8, bei welchem die Suspension des stabilisierenden Metall- und des Zirkonylsalzes, mit Ausnahme des Hydroxycarboxylations, anionenfrei ist.

**10.** Verfahren nach einem der vorhergehenden Ansprüche, bei welchem das wasserlösliche stabilisierende Metallsalz einer Hydroxycarbonsäure ein Metall, ausgewählt aus der Gruppe, bestehend aus Magnesium, Calcium, Strontium, Barium, Scandium, Yttrium, Lanthan und aus der Lanthanidgruppe ausgewählten Seltenen Erdmetallen, enthält.

**11.** Verfahren nach Anspruch 10, bei welchem das stabilisierende Metallsalz Anionen einer Hydroxycarbonsäure, ausgewählt aus der Gruppe, bestehend aus Zitronensäure, Apfelsäure, Weinsäure, Glycolsäure und Milchsäure, enthält.

**12.** Verfahren nach einem der vorhergehenden Ansprüche, bei welchem das Wasser aus der Lösung durch Sprühtrocknungstechniken entfernt wird.

**13.** Verfahren nach einem der vorhergehenden Ansprüche, bei welchem die Calcinierungstemperatur bis etwa 700°C beträgt.